# FASCICULE DE BREVET EUROPEEN

(11) **EP 2 759 474 B1**
(45) Date de publication et mention de la délivrance du brevet: **27.07.2016**
(21) Numéro de dépôt: 14000202.3
(22) Date de dépôt: 21.01.2014
(51) Int. Cl.: B64D 11/06, B60N 2/015, B60N 2/427, B60N 2/42

(54) **Siège pour aéronef motorisé muni d'un piètement comportant trois points d'ancrage au plancher de l'aéronef**
Sitz für motorisierte Luftfahrzeuge, der mit einem Fußgestell ausgestattet ist, das drei Verankerungspunkte am Boden des Luftfahrzeugs aufweist
Seat for powered aircraft having a leg assembly comprising three points for anchoring to the floor of the aircraft

(30) Priorité: 29.01.2013 FR 1300179
(43) Date de publication de la demande: 30.07.2014
(73) Titulaire: Airbus Helicopters, 13725 Marignane Cedex (FR)
(72) Inventeur: Joffre, Jean-François, F-13620 Carry LE Rouet (FR)
(74) Mandataire: Pouillot, Laurent Pierre Paul

(56) Documents cités:
- FR-A1- 2 495 101
- GB-A- 1 337 586
- US-A- 3 532 379

## Description

La présente invention est du domaine des sièges pour aéronef motorisé, avions et giravions notamment. La présente invention relève plus particulièrement des aménagements de tels sièges procurant une protection des passagers installés sur ces sièges en cas de chocs violents et/ou en cas d'un brusque changement d'allure de l'aéronef, tel que lors d'un crash.

Les aéronefs motorisés tels que les avions ou les giravions, hélicoptères notamment, sont équipés de sièges pour le transport confortable des passagers. On comprendra par passager tout individu embarqué à bord de l'aéronef, qu'il soit pilote ou personne transportée.

Dans leur généralité, les sièges comportent un piètement porteur d'un baquet conformé pour recevoir le passager. Traditionnellement, le baquet est composé d'une assise rehaussée d'un dossier et le piètement est formé d'éléments de structure comprenant des longerons latéraux prolongés par des montants verticaux. Les longerons sont munis de moyens d'ancrage au plancher de l'aéronef et les montants portent conjointement le baquet.

Les moyens d'ancrage associent communément des verrous montés sur les longerons et coopérants avec des rails pourvus de moyens de fixation au plancher. Les verrous comportent un ou plusieurs patins qui sont montés coulissants le long d'un rail pour régler la position relative entre les verrous et le rail. Des moyens de blocage permettent d'immobiliser les patins en une position désirée sur les rails. On pourra par exemple se reporter au document EP2492197 (EUROCOPTER FRANCE), qui décrit de tels verrou et rail coopérants pour ancrer un siège au plancher d'un aéronef motorisé.

Les sièges pour aéronef motorisé sont aménagés pour protéger les passagers en cas de chocs violents et/ou en cas d'un brusque changement d'allure de l'aéronef, tel que lors d'un crash. A cet effet, il est courant d'interposer entre le piètement et le baquet des moyens d'absorption d'énergie aptes à compenser les contraintes subies par le siège en cas de crash.

On pourra par exemple se reporter aux documents FR2.930.520 (EUROCOPTER FRANCE), US5273240 (SHARON BARUCH) ou encore EP0659642 (AEROSPATIALE) qui décrivent des sièges pour aéronef motorisé équipés de tels moyens d'absorption d'énergie.

Cependant, outre la faculté procurée par les moyens d'absorption d'énergie pour dissiper l'énergie à laquelle est soumis le baquet en cas de crash de l'aéronef, se pose le problème d'une déformation possible du plancher et de la répercussion sur le siège des contraintes générées par une telle déformation.

Plus particulièrement, une déformation du plancher provoque une déformation du piètement et plus spécifiquement des longerons. Le siège est en conséquence structuré pour compenser les effets d'une déformation géométrique du plancher afin de limiter leur répercussion sur le baquet. Une telle déformation géométrique du plancher à laquelle doit résister le siège, est communément admise inférieure à un écart angulaire de l'ordre de 10° environ. Un tel écart angulaire est notamment à considérer de part et d'autre du plan d'installation initial du siège sur le plancher de l'aéronef.

Pour éviter de complexifier la structure du siège et d'accroître en conséquence son encombrement et sa masse, les dites déformations du plancher sont traditionnellement compensées par une distorsion du piètement et/ou par une souplesse conférée au baquet. Une telle solution n'est pas pleinement satisfaisante et mérite d'être améliorée.

Une difficulté à surmonter réside dans le fait que l'évolution d'un crash est aléatoire et est susceptible d'induire sur les conditions de déformation du piètement des effets incertains. Une déformation du piètement peut éventuellement provoquer un blocage du baquet sur le piètement, et en corollaire une incapacité d'exploitation des moyens d'absorption d'énergie.

Dans ce contexte, il a été proposé par le document FR 2.950.607 (EUROCOPTER FRANCE) d'intégrer aux moyens d'absorption d'énergie des moyens de mobilité relative entre le piètement et le baquet. Une telle mobilité relative permet d'éviter de répercuter sur le baquet les effets d'une déformation du piètement provoquée par une déformation du plancher en cas de crash.

Cependant bien que satisfaisante, cette solution complexifie la structure du siège avec pour conséquence d'accroître ses coûts d'obtention.

Il a aussi été proposé par le document FR 2.495.101 (SOCEA) d'ancrer le piètement d'un siège au plancher d'un aéronef par de dits longerons munis de moyens d'ancrage du type à verrous et rails coopérant. Une structure porteuse du baquet est fixée au piètement par l'intermédiaire d'une structure articulée composée d'un couple d'articulations avant et de moyens déformables arrière agencés en absorbeur d'énergie. De telles dispositions autorisent une mobilité relative entre le piètement et la structure porteuse du baquet pour la préserver d'une déformation par suite d'une déformation de l'ossature d'implantation provoquée par une déformation du plancher.

Par ailleurs, si la protection des passagers est prioritaire, il ne doit pas être perdu de vue qu'un compromis doit être trouvé entre une structuration efficace du siège vis-à-vis des déformations du plancher en cas de crash, et son encombrement favorisant le confort des passagers installés sur des sièges voisins, notamment sur des sièges placés l'un devant l'autre.

Le but de la présente invention est de proposer un siège pour aéronef motorisé, intégrant des moyens d'absorption d'énergie interposés entre un baquet et un piètement du siège et des moyens limitant la répercussion sur le baquet d'une éventuelle déformation du plancher sur lequel est installé le siège.

Le siège de la présente invention est plus particulièrement recherché de structure simple pouvant être obtenue à moindres coûts, tout en favorisant la protection des passagers en cas de crash et leur confort en situation courante d'utilisation du siège.

Le siège de la présente invention est un siège pour aéronef motorisé comprenant un baquet porté par un piètement par l'intermédiaire de moyens d'absorption d'énergie.

L'invention est définie par les revendications annexées.

Le piètement comprend une ossature d'implantation du piètement sur un plan d'installation, l'ossature d'implantation étant rehaussée d'une ossature porteuse du baquet. L'ossature d'implantation est formée d'un ensemble solidaire muni de moyens d'ancrage du piètement au plan d'installation et composé d'éléments de structure indéformables.

Il est compris que le dit plan d'implantation est notamment matérialisé par le plancher de l'aéronef ou par tout autre structure porteuse analogue destinée à recevoir le siège. Il est aussi compris que l'ossature d'implantation et l'ossature porteuse forment ensemble le piètement par jonction entre elles.

Par ailleurs dans le domaine de l'installation d'un siège pour aéronef sur un plan d'implantation, les notions de dit ensemble solidaire, de dits moyens d'ancrage et de dite structure indéformable sont communément appréciées vis-à-vis d'un seuil d'efforts prédéfini selon une déformation donnée du plan d'installation. Ainsi :
-) la notion d'ensemble solidaire est comprise comme étant un ensemble d'éléments de structure assemblés entre eux par tout moyen d'assemblage apte à interdire une mobilité relative entre les éléments de structure soumis à des efforts moindres que ceux identifiés par un dit seuil d'efforts prédéfini,
-) les moyens d'ancrage procurent une jonction entre l'ensemble solidaire et le plan d'installation, apte à interdire toute mobilité relative entre eux lorsqu'ils sont soumis à des efforts moindres que ceux identifiés par un dit seuil d'efforts prédéfini,
-) la notion d'éléments de structure indéformable est comprise à contrario d'un agencement articulé propre des éléments de structure, ou encore par analogie a contrario d'une déformabilité recherchée des éléments de structure soumis à des efforts moindres que ceux identifiés par un dit seuil d'efforts prédéfini.

Le siège de la présente invention est principalement reconnaissable en ce qu'au regard de l'orientation intrinsèque du siège, lesdits moyens d'ancrage du piètement sont formés par au plus trois points d'ancrage localisés en zone médiane arrière du siège pour un premier point d'ancrage et en zones avant latérales respectivement droite et gauche du siège pour des seconds points d'ancrage.

L'orientation communément admise d'un siège est considérée au regard de la station d'un utilisateur installé dans le siège. Une telle orientation définit :
-) une zone arrière du siège vers laquelle est localisé le dossier du baquet et une zone avant du siège vers laquelle s'étend l'assise du baquet,
-) des zones latérales respectivement droite et gauche par rapport à un axe longitudinal médian du siège, le dit axe longitudinalement médian s'étendant entre l'arrière et l'avant du siège et définissant une zone médiane du siège.

Il est par ailleurs communément considéré par point d'ancrage une zone localisée de jonction entre le piètement et le plan d'installation par l'intermédiaire d'un dit moyen d'ancrage. Le moyen d'ancrage est couramment constitué d'un verrou monté sur le piètement, potentiellement par montage articulé, le verrou coopérant avec un rail fixé sur le plan d'implantation. Le verrou comporte plus particulièrement au moins un patin et des moyens de blocage en position du verrou le long du rail logeant le dit au moins un patin.

Le piètement est maintenu au plan d'installation en au plus trois points d'ancrage distants définissant entre eux un plan isostatique d'immobilisation du siège au plan d'installation. Les trois points d'ancrage interdisent une mobilité relative entre l'ossature d'implantation et le plan d'installation, en étant disposés sur le plan d'implantation les uns par rapport aux autres selon un dièdre indéformable convergent vers l'arrière du siège. Les notions de mobilité relative et d'indéformable sont à apprécier au regard du dit seuil d'efforts prédéfini.

Quelle que soit la déformation à laquelle est potentiellement soumis le plan d'installation en cas de crash, l'ensemble solidaire formant l'ossature d'implantation accompagne la déformation du plan d'installation par basculement global du dit plan isostatique. Ces dispositions sont telles qu'en cas de déformation du plan d'installation, l'ossature d'implantation est préservée de contraintes internes et finalement est préservée de toute déformation structurale propre.

Par ailleurs, l'encombrement de la zone arrière de l'ossature d'implantation peut être limité à un élément de structure arrière médian de faible encombrement, tel qu'avantageusement agencé en colonne médiane arrière. Les zones arrière latérales de l'ossature d'implantation sont dégagées. Un passager installé dans un siège voisin placé à l'arrière d'un siège pris en considération, dispose d'un espace libre pour étendre ses jambes de part et d'autre de l'élément de structure arrière médian du siège pris en considération, malgré une distance entre les dits sièges pouvant être réduite au mieux.

Selon une forme préférée de réalisation, l'ossature d'implantation comprend trois éléments de structure munis chacun de moyens d'ancrage au plan d'installation. Au regard de l'orientation intrinsèque du siège, les dits trois éléments de structure comprennent :
-) une colonne médiane arrière munie d'un premier moyen d'ancrage arrière médian et formant une interface de jonction entre l'ossature d'implantation et l'ossature porteuse, et
-) un couple de jambes solidaires de la colonne à leur extrémité arrière. Les jambes forment individuellement les branches d'un dièdre ouvert vers l'avant du siège, les jambes du dièdre s'étendant vers les côtés latéraux du siège de part et d'autre de son axe longitudinal médian. Les jambes sont chacune équipées à leur extrémité libre avant d'un second moyen d'ancrage latéral avant.

La structure de l'ossature d'implantation est robuste, simple, légère et peu encombrante, et peut être obtenue à moindres coûts par assemblage solidaire des éléments de structure entre eux, tel que par boulonnage ou technique d'assemblage analogue. La colonne est apte à constituer un support de réception de l'ossature porteuse, tout en ménageant une liberté de conception de ladite ossature porteuse et des moyens d'absorption d'énergie.

L'ossature d'implantation est de préférence équipée d'un couple d'organes d'appui du piètement contre le plan d'installation, lesdits organes d'appuis étant répartis latéralement de part et d'autre du premier point d'ancrage.

La notion d'appui est couramment définie comme une prise de contact monodirectionnelle entre deux organes, et plus spécifiquement entre les organes d'appui et le plan d'installation. Plus particulièrement, la prise d'appui de l'ossature d'implantation sur le plan d'implantation définit pour chacun des organes d'appui une prise de contact selon un seul sens, depuis un organe d'appui vers le plan d'installation et/ou inversement selon un seul sens depuis le plan d'implantation vers un organe d'appui. La notion d'appui est en cela distincte de la notion d'ancrage selon laquelle un ancrage procure une solidarisation multidirectionnelle entre les organes d'ancrage d'ancrage et le plan d'installation.

Les organes d'appui procurent une stabilisation latérale de la colonne permettant de réduire la charge supportée par le premier moyen d'ancrage en station du siège implanté sur le plan d'installation et en situation courante d'utilisation du siège considérée hors déformation du plancher. Dans le cas où une déformation du plancher provoque un soulèvement des organes d'appui, un tel soulèvement provoque un basculement global du plan isostatique d'immobilisation du siège au plan d'installation.

Les organes d'appui sont avantageusement alignés avec le premier point d'ancrage. Ces dispositions sont telles que les organes d'appui peuvent être placés en contact contre le plan d'installation par l'intermédiaire d'un organe robuste formé par un rail coopérant avec un dit verrou que comprend le premier moyen d'ancrage.

En outre pour évaluer les facultés de résistance du siège vis-à-vis d'une déformation du plan d'installation, il est notamment pris en considération un axe transversal de basculement du siège en zone arrière, et plus particulièrement un axe transversal de basculement du siège passant par le premier point d'ancrage. L'alignement des organes d'appui avec le premier moyen d'ancrage permet de prendre en considération un dit axe transversal de basculement défini non seulement par le premier point d'ancrage mais aussi par les organes d'appui.

Selon une forme de réalisation, les organes d'appui sont chacun formés par une béquille solidaire de la colonne à l'une de ses extrémités. Les béquilles formant l'un et l'autre des organes d'appui sont réparties de part et d'autre de la colonne en s'étendant latéralement à leur extrémité libre vers un côté latéral respectif du siège. De telles béquilles sont susceptibles de ménager des points d'appui localisés, à leur extrémité libre notamment, ou de ménager des surfaces d'appui étendues sur leur longueur.

Plus particulièrement, les appuis pris par les béquilles contre le plan d'installation sont potentiellement formés par des points d'appui localisés ménagés en soubassement aux extrémités libres des béquilles. Selon une variante, les appuis pris par les béquilles contre le plan d'installation sont potentiellement formés par des surfaces d'appui ménagés en soubassement le long des béquilles.

Les organes d'appui ménagent avantageusement chacun un repose-pied, voire encore un passage depuis l'arrière vers l'avant du siège ménagé en soubassement des béquilles dans le cas potentiel où les organes d'appui sont conformés en arcade ménageant un point d'appui à leur extrémité libre. La présence avantageuse des repose-pieds, voire aussi des dits passages, permet de réduire au mieux la distance de séparation entre des sièges voisins disposés l'un derrière l'autre, tout en favorisant le confort des passagers.

Les organes d'appui sont potentiellement solidaires en prolongement l'un de l'autre par l'intermédiaire d'un bloc médian d'encastrement des organes d'appui dans la colonne. Selon une forme de réalisation, les organes d'appui sont avantageusement solidarisés l'un à l'autre de part et d'autre du bloc médian, de préférence par scellement et notamment par soudage ou encore par boulonnage, voire encore par tout autre technique d'assemblage procurant une solidarisation des organes d'appui l'un à l'autre.

Les organes d'appui sont des organes préférentiellement déformables à un seuil d'efforts prédéfini significatif d'une déformation du plancher en cas de crash. Ces dispositions permettent d'éviter une transmission de contraintes depuis les organes d'appui vers la colonne en cas de crash.

Tel que connu, les moyens d'ancrage sont par exemple chacun formés d'un verrou comportant au moins un patin coopérant avec un rail muni de moyens de fixation au plan d'installation, le verrou étant muni de moyens de blocage en position le long du rail

Les rails sont de préférence au nombre de deux, en étant disposés transversalement au siège. Les rails coopèrent respectivement avec des verrous affectés aux jambes pour un rail avant et avec un verrou affecté à la colonne pour un rail arrière.

Selon une variante, les rails sont potentiellement au nombre de trois en étant disposés longitudinalement au siège. Les rails logent respectivement un verrou affecté à une jambe latérale droite pour un rail avant droit, un verrou affecté à une jambe latérale gauche pour un rail avant gauche et un verrou affecté à la colonne pour un rail arrière médian.

L'ossature porteuse est avantageusement formée par un prolongement de la colonne suivant sa direction générale d'extension.

Selon une forme particulière de réalisation, l'ossature porteuse comporte un couple de montants latéraux solidaires de la colonne, les dits montants étant par exemple rapportés par boulonnage ou autre technique d'assemblage analogue, voire encore par scellement tel que par soudage.

Un exemple de réalisation de la présente invention va être décrit en relation avec les figures des planches annexées, dans lesquelles :
- la fig.1 est une vue schématique de côté d'un siège pour aéronef selon un exemple de réalisation de la présente invention.
- les fig.2 et fig.3 sont des vues en perspective d'une ossature d'implantation que comporte le siège représenté sur la fig.1, respectivement illustré de quart arrière pour la fig.2 et de face pour la fig.3.

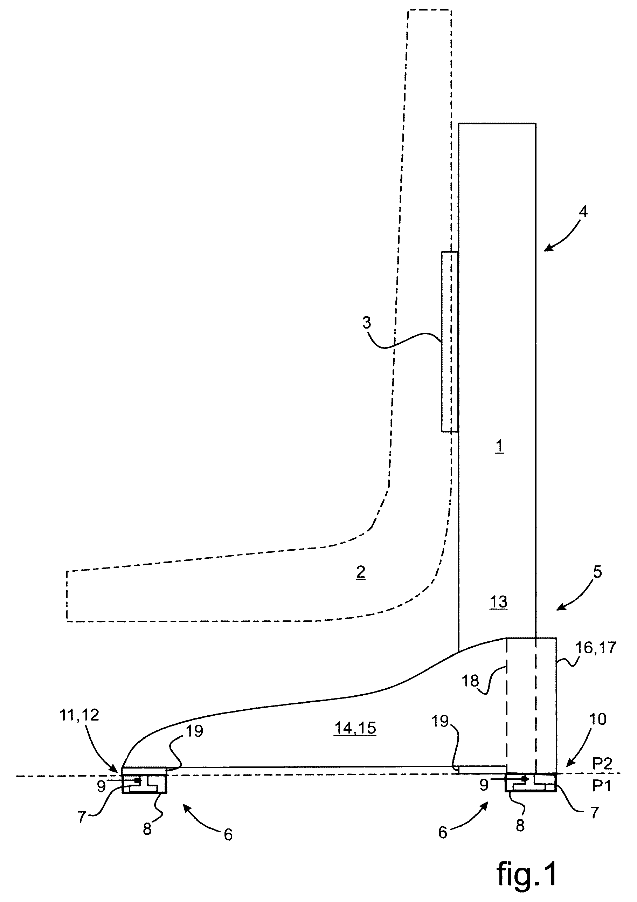

Sur la fig.1, un siège pour aéronef motorisé comporte principalement un piètement 1 porteur d'un baquet 2 par l'intermédiaire de moyens à absorption d'énergie 3. Le piètement 1 est composé d'une ossature porteuse 4 du baquet 2 et d'une ossature d'implantation 5 sur un plan d'installation P1, plancher de l'aéronef notamment.

Le piètement 1 du siège est ancré au plan d'installation P1 par des moyens d'ancrage 6. De tels moyens d'ancrage 6 sont des moyens connus en eux-mêmes, associant un verrou 7 fixé au piètement 1 et un rail 8 fixé sur le plan d'installation P1. Le verrou 7 comprend au moins un patin destiné à être logé par un rail 8, et des moyens de blocage 9 permettant d'immobiliser le verrou 7 sur le rail 8 à une position désirée.

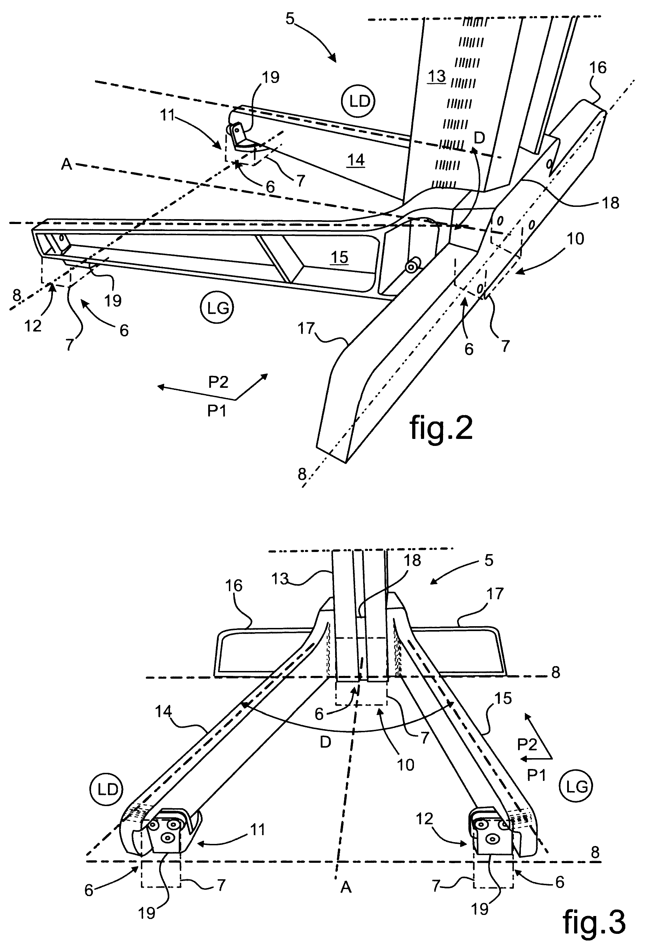

Sur les fig.2 et fig.3, il est illustré un axe longitudinalement médian A du siège s'étendant entre l'avant et l'arrière du siège. Il est encore défini des zones latérales du siège, respectivement zone latérale droite LD et zone latérale gauche LG, réparties de part et d'autre de l'axe longitudinal médian A. Une orientation transversale s'étend entre les zones latérales LD et LG du siège, transversalement à l'axe longitudinalement médian A.

Sur les fig.1 à fig.3, le piètement du siège est ancré au plan d'installation par l'intermédiaire de l'ossature d'implantation 5 en au plus trois points d'ancrage 10, 11, 12 délimitant un plan isostatique P2 de basculement du siège en cas de déformation du plan d'installation P1. Quelles que soient les déformations subies par le plan d'installation, le siège bascule en étant globalement maintenu dans le dit plan isostatique P2.

Un premier point d'ancrage 10 est localisé en zone médiane arrière du siège, des seconds points d'ancrage 11 et 12 étant localisés en zone avant latérales respectivement droite et gauche. Les seconds points d'ancrage 11, 12 définissent avec le premier point d'ancrage 10 les branches d'un dièdre D illustré sur les fig.2 et fig.3. Le dièdre D est ouvert vers l'avant du siège, les branches du dièdre D s'étendant depuis l'arrière du siège respectivement de part et d'autre de l'axe longitudinalement médian A du siège et latéralement vers l'avant du siège. A titre indicatif, l'angle du dièdre D est compris entre 30° et 60°, et est de préférence choisi de 35°.

L'ossature d'implantation 5 est formée d'un ensemble solidaire principalement composé d'une colonne 13 médiane arrière ménageant le premier point d'ancrage 10, et de jambes 14 et 15 solidaires de la colonne 13 qui forment les branches du dièdre D en ménageant les seconds points d'ancrage à leur extrémité libre.

Les jambes 14, 15 sont chacune conformées en équerre ou en arcade par exemple, et sont fixées sur la colonne 13 à l'une de leur extrémité, par boulonnage notamment. Les jambes 14, 15 sont chacune équipées à leur autre extrémité libre d'un sabot 19 de montage du verrou 7 que comportent des seconds moyens d'ancrage 6 respectivement affectés à l'une et l'autre des branches 14, 15.

La colonne 13 est munie à sa base du verrou 7 d'un premier moyen d'ancrage 6, et est équipée d'organes d'appui 16 et 17 ménageant des points d'appui de l'ossature d'implantation 5 contre le plan d'installation P1. La colonne 13 est par exemple issue d'un profilé évidé à la base duquel est fixé un bloc médian 18 solidarisant les organes d'appui 16, 17 l'un à l'autre. Le bloc médian 18 est plus particulièrement encastré et fixé en soubassement de la colonne 13, par boulonnage notamment.

Les organes d'appui 16, 17 sont chacun agencés en béquille conformées en arcade ou en barreau par exemple. Les organes d'appui 16, 17 forment avantageusement à leur sommet des repose-pieds pour un passager installé dans un siège placé sur le plan d'implantation P1 à l'arrière du siège illustré. Le bloc médian 18 est mis à profit pour monter sur la colonne 13 le verrou 7 que comporte le premier moyen d'ancrage 6.

Sur l'exemple de réalisation illustré, les rails 8 que comprennent les moyens d'ancrage 6 sont au nombre de deux en étant orientés transversalement à l'axe longitudinal médian A du siège.

Un rail 8 arrière coopère avec le verrou 7 monté sur la colonne 13, et est exploité pour procurer un appui robuste des organes d'appui 16, 17 contre le plan d'installation P1. Un rail 8 avant coopère conjointement avec les verrous 7 respectivement montés sur l'une et l'autre des jambes 14, 15.

## Revendications

1. Siège pour aéronef motorisé comprenant un baquet (2) porté par un piètement (1) par l'intermédiaire de moyens d'absorption d'énergie (3), le piètement (1) comprenant une ossature d'implantation (5) du piètement sur un plan d'installation (P1), l'ossature d'implantation (5) étant rehaussée d'une ossature porteuse (4) du baquet (2) et étant formée d'un ensemble solidaire muni de moyens d'ancrage (6) du piètement (1) au plan d'installation (P1) et composé d'éléments de structure indéformables,
**caractérisé en ce qu'**au regard de l'orientation intrinsèque du siège, lesdits moyens d'ancrage du piètement (1) sont formés par trois points d'ancrage (10, 11, 12) localisés en zone médiane arrière du siège pour un premier point d'ancrage (10) et en zones avant latérales respectivement droite et gauche du siège pour des seconds points d'ancrage (11, 12), lesdits trois points d'ancrage (10,11,12) définissant entre eux un plan dit plan isostatique (P2), l'ossature d'implantation (5) étant apte à accompagner une déformation du plan d'installation (P1) par basculement global du dit plan isostatique (P2).

2. Siège selon la revendication 1,
**caractérisé en ce qu'**au regard de l'orientation intrinsèque du siège, l'ossature d'implantation (5) comprend trois éléments de structure (13, 14, 15) munis chacun de moyens d'ancrage (6) au plan d'installation (P1), dont :
-) une colonne (13) médiane arrière munie d'un premier moyen d'ancrage (6) arrière médian et formant une interface de jonction entre l'ossature d'implantation (5) et l'ossature porteuse (4), et
-) un couple de jambes (14, 15) solidaires de la colonne (13) à leur extrémité arrière, les jambes (14, 15) formant individuellement les branches d'un dièdre (D) ouvert vers l'avant du siège, les branches du dièdre (D) s'étendant vers les côtés latéraux du siège de part et d'autre de son axe longitudinal médian (A), les jambes (14, 15) étant chacune équipées à leur extrémité libre avant d'un second moyen d'ancrage (6) latéral avant.

3. Siège selon l'une quelconque des revendications 1 et 2,
**caractérisé en ce que** l'ossature d'implantation (5) est équipée d'un couple d'organes d'appui (16, 17) du piètement (1) contre le plan d'installation (P1), lesdits organes d'appuis (16, 17) étant répartis latéralement de part et d'autre du premier point d'ancrage (10).

4. Siège selon la revendication 3,
**caractérisé en ce que** les organes d'appui (16, 17) sont alignés avec le premier point d'ancrage (10).

5. Siège selon la revendication 2 et l'une quelconque des revendications 3 et 4,
**caractérisé en ce que** les organes d'appui (16, 17) sont chacun formés par une béquille solidaire de la colonne (13) à l'une de ses extrémités, les béquilles formant l'un et l'autre des organes d'appui (16, 17) étant réparties de part et d'autre de la colonne (13) en s'étendant latéralement à leur extrémité libre vers un côté latéral respectif du siège.

6. Siège selon l'une quelconque des revendications 4 et 5,
**caractérisé en ce que** les organes d'appui (16, 17) ménagent chacun un repose-pied.

7. Siège selon la revendication 4 et l'une quelconque des revendications 5 et 6,
**caractérisé en ce que** les organes d'appui (16, 17) sont solidaires en prolongement l'un de l'autre par l'intermédiaire d'un bloc médian (18) d'encastrement des organes d'appui (16, 17) dans la colonne (13).

8. Siège selon l'une quelconque des revendications 3 à 7, **caractérisé en ce que** les organes d'appui sont des organes déformables à un seuil d'efforts prédéfini.

9. Siège selon l'une quelconque des revendications 1 à 8, **caractérisé en ce que** les moyens d'ancrage (6) sont chacun formés d'un verrou (7) comportant au moins un patin apte à coopérer avec un rail (8) muni de moyens de fixation au plan d'installation, le verrou (7) étant muni de moyens de blocage (9) en position le long du rail (8).

10. Siège selon la revendication 9,
**caractérisé en ce que** les rails (8) sont au nombre de deux et sont disposés transversalement au siège, les rails (8) coopérant respectivement avec des verrous (7) affectés aux jambes (14, 15) pour un rail (8) avant et avec un verrou (7) affecté à la colonne (13) pour un rail (8) arrière.

11. Siège selon l'une quelconque des revendications 2 à 10, **caractérisé en ce que** l'ossature porteuse (4) est formée par un prolongement de la colonne (13).

## Patentansprüche

1. Sitz für ein motorisiertes Luftfahrzeug mit einer Sitzschale (2), die von einem Fußgestell (1) über Energieabsorptionsmittel (3) getragen wird, wobei das Fußgestell (1) eine Konstruktion (5) zum Einbau des Fußgestells auf einer Montageebene (P1) aufweist, wobei die Montagekonstruktion (5) erhöht ist durch eine Tragkonstruktion (4) der Sitzschale (2) und gebildet wird durch eine feste Einheit, die mit Verankerungsmitteln (6) des Fußgestells (1) auf der Montageebene (P1) versehen ist und aus unverformbaren Strukturelementen besteht,
**dadurch gekennzeichnet, dass** unter Berücksichtigung der intrinsischen Ausrichtung des Sitzes die Verankerungsmittel des Fußgestells (1) gebildet werden durch drei Verankerungspunkte (10, 11, 12), die in dem mittleren hinteren Bereich des Sitzes für einen ersten Verankerungspunkt (10) und den vorderen seitlichen Bereichen, jeweils rechts und links des Sitzes, für die zweiten Verankerungspunkte (11, 12) angeordnet sind, wobei die drei Verankerungspunkte (10, 11, 12) miteinander eine Ebene, genannt isostatische Ebene (P2), definieren, wobei die Montagekonstruktion (5) in der Lage ist, eine Verformung der Montageebene (P1) mit einer insgesamten Verkippung der isostatischen Ebene (P2) zu begleiten.

2. Sitz nach Anspruch 1,
**dadurch gekennzeichnet, dass** mit Rücksicht auf die intrinsische Ausrichtung des Sitzes die Montagekonstruktion (5) drei Strukturelemente (13, 14, 15) aufweist, die jeweils mit Mitteln (6) zur Verankerung auf der Montageebene (P1) versehen sind, von denen:
-) eine hintere Mittelsäule (13) mit einem ersten hinteren mittleren Verankerungsmittel (6) versehen ist, und eine Verbindungsschnittstelle zwischen der Montagekonstruktion (5) und der Tragkonstruktion (4) bildet, und
-) ein Paar von Armen (14, 15) mit ihren hinteren Enden mit der Säule (13) fest verbunden ist, wobei die Arme (14, 15) jeweils die Arme eines Dieders (D) bilden, das zur Vorderseite des Sitzes hin offen ist, wobei die Arme des Dieders (D) sich seitlich des Sitzes zu beiden Seiten seiner Mittellängsachse (A) erstrecken, wobei die Arme (14, 15) jeweils an ihrem freien vorderen Ende mit einem zweiten seitlichen vorderen Verankerungsmittel (6) versehen sind.

3. Sitz nach einem der Ansprüche 1 und 2,
**dadurch gekennzeichnet, dass** die Montagekonstruktion (5) mit einem Paar Auflageelementen (16, 17) des Fußgestells (1) auf der Montageebene (P1) versehen ist, wobei die Auflageelemente (16, 17) seitlich zu beiden Seiten des ersten Verankerungspunkts (10) angeordnet sind.

4. Sitz nach Anspruch 3,
**dadurch gekennzeichnet, dass** die Auflageelemente (16, 17) mit dem ersten Verankerungspunkt (10) ausgerichtet sind.

5. Sitz nach Anspruch 2 und einem der Ansprüche 3 und 4,
**dadurch gekennzeichnet, dass** die Auflageelemente (16, 17) jeweils durch einen Stützfuß gebildet werden, der an einem seiner Enden mit der Säule (13) fest verbunden ist, wobei die Stützfüße das eine und das andere Auflageelement (16, 17) bilden und zu beiden Seiten der Säule (13) angeordnet sind, indem sie sich seitlich mit ihrem freien Ende jeweils zu einer Seite des Sitzes erstrecken.

6. Sitz nach einem der Ansprüche 4 und 5,
**dadurch gekennzeichnet, dass** die Auflageelemente (16, 17) jeweils eine Fußstütze bilden.

7. Sitz nach Anspruch 4 und einem der Ansprüche 5 und 6,
**dadurch gekennzeichnet, dass** die Auflageelemente (16, 17) über einen mittleren Block (18) zum Einbau der Auflageelemente (16, 17) in der Säule (13) unter gegenseitiger Verlängerung miteinander fest verbunden sind.

8. Sitz nach einem der Ansprüche 3 bis 7,
**dadurch gekennzeichnet, dass** die Auflageelemente bei einem vordefinierten Kraftschwellenwert verformbare Elemente sind.

9. Sitz nach einem der Ansprüche 1 bis 8,
**dadurch gekennzeichnet, dass** die Verankerungsmittel (6) jeweils von einem Riegel (7) gebildet werden, der mindestens eine Kufe aufweist, die mit einer Schiene (8) zusammenwirken kann, die mit Mitteln zur Befestigung an der Montageebene versehen ist, wobei der Riegel (7) mit Lagefeststellmitteln (9) entlang der Schiene (8) versehen ist.

10. Sitz nach Anspruch 9,
**dadurch gekennzeichnet, dass** die Schienen (8) in einer Anzahl von zwei vorhanden sind und quer zum Sitz angeordnet sind, wobei die Schienen (8) jeweils mit den an den Armen (14, 15) befestigten Riegeln (7) für eine vordere Schiene (8) und mit einem an der Säule (13) befestigten Riegel (7) für eine hintere Schiene (8) zusammenwirken.

11. Sitz nach einem der Ansprüche 2 bis 10,
**dadurch gekennzeichnet, dass** die Tragkonstruktion (4) durch eine Verlängerung der Säule (13) gebildet wird.

## Claims

1. Seat for motorised aircraft comprising a seat pan (2) carried by an underframe (1) via energy absorption means (3), the underframe (1) comprising an implantation framework (5) for implanting the underframe on an installation plane (P1), the implantation framework (5) being extended upwards by a carrier framework (4) for carrying the seat pan (2) and being formed of an integral assembly provided with anchorage means (6) for anchoring the underframe (1) to the installation plane (P1) and composed of non-deformable structural elements,
**characterised in that** with regard to of the intrinsic orientation of the seat, said means for anchoring the underframe (1) are formed by three anchor points (10, 11, 12) located in a rear median zone of the seat for a first anchor point (10) and in the lateral front zones, right and left respectively, of the seat for second anchor points (11, 12), said three anchor points (10, 11, 12) together defining what is known as an isostatic plane (P2), the implantation framework (5) being capable of going along with deformation of the installation plane (P1) by overall tilting of said isostatic plane (P2).

2. Seat according to Claim 1,
**characterised in that** with regard to the intrinsic orientation of the seat, the implantation framework (5) comprises three structural elements (13, 14, 15) each provided with anchorage means (6) for anchoring to the installation plane (P1), including:
-) a rear median column (13) provided with a first median rear anchorage means (6) and forming a joining interface between the implantation framework (5) and the carrier framework (4), and
-) a pair of legs (14, 15) secured to the column (13) at their rear end, the legs (14, 15) individually forming the branches of a dihedron (D) open towards the front of the seat, the branches of the dihedron (D) extending towards the lateral sides of the seat on either side of its median longitudinal axis (A), the legs (14, 15) each being fitted at their front free ends with a second front lateral anchorage means (6).

3. Seat according to any one of claims 1 and 2,
**characterised in that** the implantation framework (5) is fitted with a pair of support members (16, 17) supporting the underframe (1) on the installation plane (P1), said support members (16, 17) being distributed laterally on either side of the first anchor point (10).

4. Seat according to Claim 3,
**characterised in that** the support members (16, 17) are aligned with the first anchor point (10).

5. Seat according to claim 2 and any one of claims 3 and 4,
**characterised in that** the support members (16, 17) are each formed by a crutch integral to the column (13) at one of its ends, the crutches forming respectively support members (16, 17) that are distributed on either side of the column (13) while extending laterally at their free ends to a respective lateral side of the seat.

6. Seat according to any one of claims 4 and 5,
**characterised in that** the support members (16, 17) each form a foot-rest.

7. Seat according to claim 4 and any one of claims 5 and 6,
**characterised in that** the support members (16, 17) are integral to and extend from each other via a median housing block (18) for housingthe support members (16, 17) in the column (13).

8. Seat according to any one of claims 3 to 7
**characterised in that** the support members are deformable at a predefined stress threshold.

9. Seat according to any one of claims 1 to 8,
**characterised in that** the anchorage means (6) are each formed of a bolt (7) having at least one runner capable of cooperating with a rail (8) provided with means for fixing to the installation plane, the bolt (7) being provided with locking means (9) for locking in position along the rail (8).

10. Seat according to Claim 9,
**characterised in that** the rails (8) are two in number and are positioned transverse to the seat, the rails (8) cooperating respectively with the bolts (7) assigned to the legs (14, 15) for a front rail (8) and with a bolt (7) assigned to the column (13) for a rear rail (8).

11. Seat according to any one of claims 2 to 10,
**characterised in that** the carrier framework (4) is formed by an extension of the column (13).
